(19) Europäisches Patentamt
European Patent Office
Office européen des brevets

(11) **EP 1 438 552 B1**

(12) **EUROPÄISCHE PATENTSCHRIFT**

(45) Veröffentlichungstag und Bekanntmachung des Hinweises auf die Patenterteilung:
**22.07.2009 Patentblatt 2009/30**

(21) Anmeldenummer: **02762249.7**

(22) Anmeldetag: **24.08.2002**

(51) Int Cl.:
*G01F 23/00* $^{(2006.01)}$   *G01F 23/26* $^{(2006.01)}$

(86) Internationale Anmeldenummer:
**PCT/DE2002/003117**

(87) Internationale Veröffentlichungsnummer:
**WO 2003/025521 (27.03.2003 Gazette 2003/13)**

(54) **VERFAHREN ZUR BERECHNUNG EINES ZEITLICHEN FÜLLSTANDSSIGNALS**

METHOD FOR CALCULATING A TEMPORAL LEVEL SIGNAL

PROCEDE DE CALCUL D'UN SIGNAL DE NIVEAU DE REMPLISSAGE TEMPOREL

(84) Benannte Vertragsstaaten:
**DE FR GB**

(30) Priorität: **12.09.2001 DE 10144875**

(43) Veröffentlichungstag der Anmeldung:
**21.07.2004 Patentblatt 2004/30**

(73) Patentinhaber: **ROBERT BOSCH GMBH**
**70442 Stuttgart (DE)**

(72) Erfinder: **JAKOBY, Bernhard**
**A-1180 Wien (AT)**

(56) Entgegenhaltungen:
**WO-A-01/20271**        **FR-A- 1 389 869**
**US-A- 2 982 908**

**Beschreibung**

Die Erfindung betrifft ein Verfahren zur Berechnung eines zeitlichen Füllstandssignals aus einem Sensorsignal eines Füllstandssensors zur Detektion des Füllstandspegels einer Flüssigkeit.

Die Erfindung betrifft weiterhin ein Füllstandsmeßsystem mit mindestens einem Füllstandssensor zur Detektion des Füllstandspegels einer Flüssigkeit und einer Recheneinheit zur Berechnung eines zeitlichen Füllstandssignals aus dem Sensorsignal des mindestens einen Füllstandssensors zur Durchführung des Verfahrens.

Füllstandsmeßsysteme mit Füllstandssensoren, die in eine Flüssigkeit eingetaucht sind, werden insbesondere in Kraftfahrzeugen eingesetzt und sind hinreichend bekannt. Die Detektion des Füllstands der Flüssigkeit erfolgt beispielsweise mit kapazitiven Füllstandssensoren, wobei die Kapazität der Sensorstrukturen durch den Flüssigkeitspegel sowie durch die dielektrischen Eigenschaften der Flüssigkeit beeinflusst wird.

Bei der Bestimmung eines zeitlichen Füllstandssignals ergibt sich oftmals jedoch das Problem, dass der Füllstand, z. B. bei bewegtem Kraftfahrzeug erheblich schwankt.

In der Regel wird daher eine zeitliche Ermittlung des resultierenden Füllstandssignals vorgenommen, um die vorhandene Flüssigkeitsmenge, wie. z. B. Motoröl- oder Treibstoffmenge, abzuschätzen.

Die Füllstandssensoren sind als längliche Fühler ausgebildet, die entlang des zur detektierenden Füllstandspegelbereiches mit Sensorstrukturen belegt sind. Insbesondere bei hochviskosen Flüssigkeiten ergibt sich bei schwankendem Flüssigkeitsstand das Problem, dass sich ein Flüssigkeitsfilm auf kurzzeitig benetzten Sensoroberflächen ausbildet. Dieser Flüssigkeitsfilm verursacht z. B. bei analogen kapazitiven oder thermischen Füllstandssensoren ein positives Fehlersignal. Das Sensorsignal zur Berechnung des momentanen Füllstandspegels ist dann aufgrund des zurückbleibenden Flüssigkeitsfilms zu groß.

Nach einiger Zeit laufen diese Flüssigkeitsfilme in Abhängigkeit von den Flüssigkeitseigenschaften, wie Dichte und Viskosität, wieder ab. Hierdurch verschwindet das Fehlersignal. Bei schwankendem Füllstandspegel wird dieser Flüssigkeitsfilm jedoch regelmäßig erneuert, so dass ein gemitteltes zeitliches Füllstandssignal einen positiven Fehler aufweist.

Aufgabe der Erfindung war es daher, ein verbessertes, gattungsgemäßes Verfahren zur Berechnung eines zeitlichen Füllstandssignals aus einem Sensorsignal eines Füllstandssensors zu schaffen, mit dem der Füllstand wesentlich genauer bestimmt werden kann.

Die Aufgabe wird erfindungsgemäß dadurch gelöst, dass das zeitliche Füllstandssignal als Funktion des Sensorsignals und des Ablaufverhaltens der Flüssigkeit am Füllstandssensor nach dem im Anspruch 1 definiertes Verfahren berechnet wird.

Im Gegensatz zur herkömmlichen reinen zeitlichen Mittelung des Füllstandssignals bei der Füllstandsberechnung schwankender Flüssigkeitsmengen wird erfindungsgemäß der Fehler berücksichtigt, der durch die sich ausbildenden Flüssigkeitsfilme verursacht wird. Hierzu wird das Ablaufverhalten der Flüssigkeit von der Oberfläche des Füllstandssensors modelliert und zusammen mit dem Sensorsignal als Funktion zur Berechnung des zeitlichen Füllstandssignals verwendet.

Das Modell für das Ablaufverhalten der Flüssigkeit am Füllstandssensor sollte im wesentlichen von den Materialeigenschaften der Flüssigkeit, wie z. B. Viskosität und Dichte, den Materialeigenschaften des Füllstandssensors, insbesondere die Oberflächenbeschaffenheit, als auch von äußeren Einflüssen, wie die Temperatur der Flüssigkeit, abhängig sein. Diese Parameter können entweder voreingestellt oder durch weitere Sensoren bestimmt werden.

In einer bevorzugten Ausbildung des Verfahrens ist die Funktion zur Berechnung des zeitlichen Füllstandssignals weiterhin von den modellierten Auswirkungen eines Flüssigkeitsfilms an dem Füllstandssensor auf das Sensorsignal abhängig. Die Funktion kann z. B. die Inhomogenität eines Flüssigkeitsfilms mit berücksichtigen.

Da das Systemverhalten in der Regel nichtlinear ist, erfolgt die Berechnung vorzugsweise durch entsprechende Näherungen. So ist es besonders vorteilhaft, ein Korrektursignal von dem zeitlich gemessenen Füllstandssignal zu substrahieren. Das Korrektursignal ist hierbei eine Funktion von zeitlichen Schwankungen des Füllstandspegels. Das Korrektursignal hängt somit von den zuletzt beobachteten Schwankungen des Füllstands ab. Diese Schwankungen können z. B durch eine laufende zeitliche Streuung $\sigma(s)$ charakterisiert werden, so dass das Korrektursignal eine Funktion der laufenden zeitlichen Streuung sein kann.

Wie bereits oben erläutert, kann das Korrektursignal eine Funktion der Viskosität der Flüssigkeit, Dichte der Flüssigkeit und/oder Temperatur der Flüssigkeit etc. sein.

Zur Berechnung eines zeitlichen Füllstandssignals von Motoröl in einem Verbrennungsmotor wird weiterhin vorgeschlagen, das Maß einer im Verbrennungsmotor umlaufenden Menge von Motoröl auf das ermittelte Füllstandssignal zu addieren. Hierbei kann die umlaufende Menge als Funktion der Drehzahl des Verbrennungsmotors und der Temperatur des Motoröls bestimmt werden.

Die Aufgabe wird ferner durch das Füllstandsmeßsystem nach Anspruch 8 gelöst, das zur Durchführung des oben beschriebenen Verfahrens ausgebildet ist.

Die Erfindung wird nachfolgend anhand der beigefügten Zeichnungen näher erläutert. Es zeigen:

Figur 1 -     Skizze eines Füllstandsmeßsystems zur Durchführung des erfindungsgemäßen Verfahrens;

Figur 2 - Diagramm eines zeitlichen Füllstands bei sprungförmiger Füllstandsänderung;

Figur 3 - Diagramm der zeitlichen Änderung des Füllstandssignals bei der sprungförmigen Füllstandsänderung aus Figur 2.

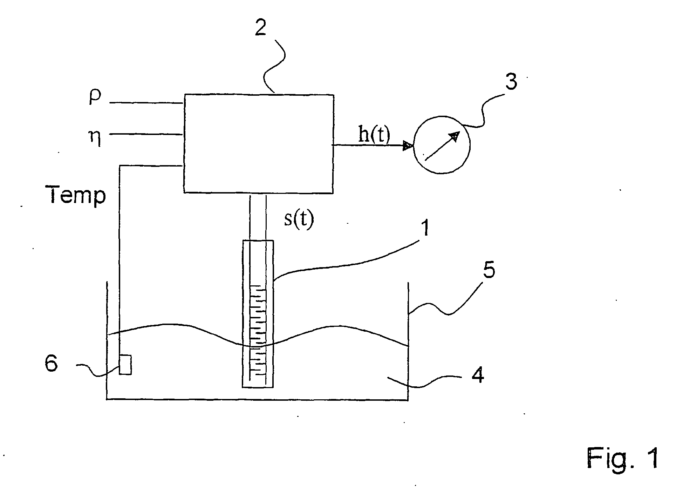

Die Figur 1 lässt eine schematische Skizze eines Füllstandsmeßsystems erkennen, das im wesentlichen einen Füllstandssensor 1 und eine Recheneinheit 2 zur Berechnung eines zeitlichen Füllstandssignal h(t) aus dem Sensorsignal s(t) des Füllstandssensors 1 hat. Das zeitliche Füllstandssignal h(t) wird auf einer Anzeigeeinheit 3 dargestellt.

Der Füllstandssensor 1 ist in bekannter Weise als länglicher Fühler aufgebaut, der in eine Flüssigkeit 4 in einem Behälter 5 eingetaucht ist. Der Fühler hat eine Sensorstruktur im zu detektierenden Füllstandspegelbereich. In dem dargestellten Beispiel ist der Füllstandssensor 1 als kapazitiver Sensor mit einer kammartig ineinandergreifenden Struktur ausgebildet.

Die Flüssigkeit 4 schwankt z. B. bei bewegtem Behälter 5 oder Kraftfahrzeug, in das der Behälter 5 eingebaut ist. Dies führt zu einem ebenfalls schwankenden zeitlichen Verlauf des Füllstandssensorsignals s(t).

Herkömmlicherweise wird eine zeitliche Mittelung des schwankenden Füllstands-Sensorsignals s(t) vorgenommen, um den tatsächlichen Füllstand der Flüssigkeit 4 in dem Behälter 5 zu bestimmen.

Erfindungsgemäß ist die Recheneinheit 2 nunmehr so ausgebildet, dass aus dem zeitlichen Verlauf des Sensorsignals s(t) des Füllstandssensors 1 der tatsächliche zeitliche Verlauf des Füllstands, das heißt, das Füllstandssignal h(t) oder dessen laufendes zeitliches Mittel $\overline{h}(t)$ (näherungsweise) berechnet wird. Das Verfahren zur Berechnung des Füllstandssignals h(t) verwendet hierbei einen Algorithmus, der auf einem Modell für das Ablaufverhalten der Flüssigkeit, 4 an dem Flüssigkeitssensor 1 basiert. Dieses Modell hängt unter anderem von den Materialeigenschaften der Flüssigkeit 4, wie Viskosität und Dichte, den Materialeigenschaften des Flüssigkeitssensors 1, insbesondere der Oberflächenbeschaffenheit, als auch von äußeren Einflüssen, wie z. B. die Temperatur der Flüssigkeit 4 ab. Die Temperatur der Flüssigkeit 4 kann z. B. mit Hilfe eines Temperatursensors 6 bestimmt werden, der in die Flüssigkeit 4 eingetaucht ist. Der Temperatursensor 6 ist hierbei an die Recheneinheit 2 angeschlossen. Die Viskosität η und die Dichte ρ werden entweder als Sensorsignal an die Recheneinheit 2 gegeben oder sind voreingestellte Werte.

Die Recheneinheit 2 ist z. B. durch geeignete Programmierung so ausgebildet, dass das zeitliche Füllstandssignal h(t) als Funktion des Sensorsignals s(t) und des modellierten Ablaufverhaltens der Flüssigkeit 4 an dem Füllstandssensor 1 zumindest näherungsweise berechnet wird. Weiterhin ist die Funktion zur Berechnung des zeitlichen Füllstandssignals h(t) von den modellierten Auswirkungen eines Flüssigkeitsfilms, der an dem Füllstandssensor 1 haftet, auf das Sensorsignal s(t) abhängig.

Diese funktionalen Zusammenhänge werden nachfolgend an einem Beispiel theoretisch weiter erläutert.

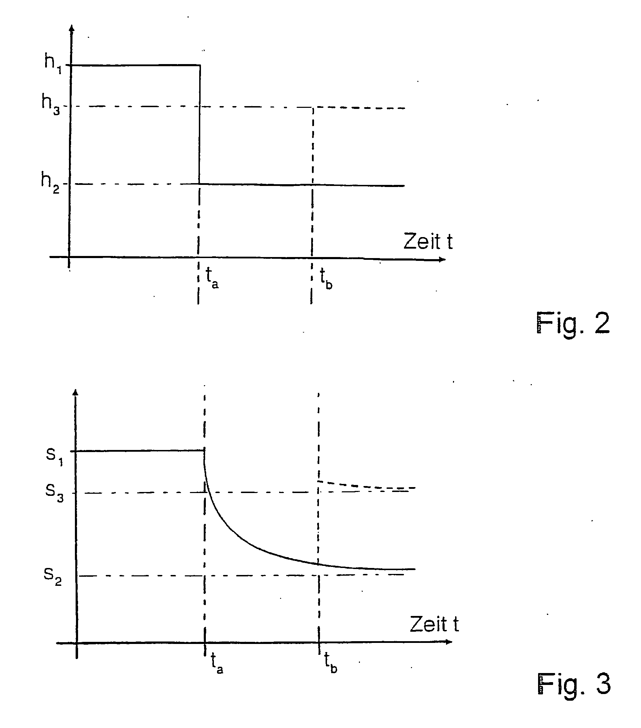

Die Figur 2 zeigt ein Diagramm eines idealisierten, sich zeitlich sprungförmig ändernden Füllstandssignals h(t) über die Zeit t.

Die Figur 3 zeigt ein Diagramm des zu dem Füllstandssignal h(t) gehörigen Sensorsignals s(t), das von dem Füllstandssensor 1 aufgenommen wird.

Unter der Annahme eines sehr lange konstant vorliegenden Füllstandes $h_1$ stellt sich das zugehörige "statische" Sensorsignal $s_1$ ein. Zum Zeitpunkt $t_a$ springt der Füllstand abrupt auf den Wert $h_2$, Aufgrund des an der Oberfläche des länglichen Füllstandssensors 1 ablaufenden Flüssigkeitsfilms folgt das Sensorssignal s(t) dem sprunghaften Absinken des Flüssigkeitspegels nur mit Verzögerung, so dass sich das zugehörige statische Sensorsignal $s_2$ erst nach entsprechender Zeit, beispielsweise asymptotisch einstellt.

Im weiteren Verlauf ist mit gestrichelten Linien der Fall aufgezeigt, dass sich zur Zeit $t_b$ das Füllstandssignal h(t) abrupt auf den Füllstandspegel $h_3$ erhöht. Da der Füllstandssensor 1 sofort benetzt wird, folgt das Sensorsignal s(t) diesem sprunghaften Anstieg des Füllstandspegels sehr schnell. Da in dem dargestellten Fall der Füllstandspegel $h_3$ unterhalb des Füllstandspegels $h_1$ liegt, ergibt sich ein "Überschießen" des Sensorssignals s(t) über den zu dem Füllstandspegel $h_3$ gehörenden statischen Wert $s_3$, da der Füllstandssensor 1 im Füllstandspegelbereich $h_3$ bis $h_1$ noch mit einem Flüssigkeitsfilmrest von der Benetzung vor dem Zeitpunkt $t_a$ bedeckt ist.

Damit wird die Problematik deutlich, dass die Ansprechzeit des Sensorsignals s(t) bei positiven Füllstandsänderungen $\left(\dfrac{\Delta h}{\Delta t} > 0\right)$ wesentlich kleiner als bei negativen Füllstandsänderungen $\left(\dfrac{\Delta h}{\Delta t} < 0\right)$ ist.

Dies führt zwangsläufig zu einer Verschiebung des laufenden zeitlichen Mittels des zeitlichen Sensorsignals s(h) zu überhöhten Werten.

Das laufende zeitliche Mittel des Sensorsignals $\overline{s}(t)$ kann beispielsweise durch die Formel

$$\overline{s}(t) = \frac{1}{T}\int_{-T/2}^{+T/2} s(t+\tau)\,d\tau$$

definiert werden.

Die Zeit t entspricht dabei dem bei der Mittelung betrachteten Zeitintervall.

Um nun aus dem zeitlichen Verlauf des Sensorsignals s(t) einen korrekteren zeitlichen Verlauf des Füllstandspegels, das heißt ein verbessertes Füllstandssignal h(t) oder dessen laufendes zeitliches Mittel $\overline{h}$ berechnen zu können, wird ein Modell für das Ablaufverhalten der Flüssigkeit 4 an dem Füllstandssensor 1 sowie ein Modell für die Auswirkung eines möglicherweise inhomogenen Flüssigkeitsfilms auf das Sensorsignal s(t) berücksichtigt. Das Ablaufverhalten der Flüssigkeit 4 an dem Füllstandssensor 1 hängt unter anderem von den Materialeigenschaften der Flüssigkeit, wie z. B. Viskosität η und Dichte ρ ab.

Das Ablaufverhalten wird weiterhin durch die Materialeigenschaften des Füllstandssensors 1, wie z. B. der Oberflächenbeschaffenheit, und von äußeren Einflüssen; wie der Temperatur Temp der Flüssigkeit bestimmt.

Basierend auf diesen beiden Modellen kann aus einem gegebenen Füllstandsverlauf mit dem Füllstandssignal h(t) auf das Sensorsignal s(t) des Füllstandssensors 1 zurückgeschlossen werden. Formal analytisch kann dieser Zusammenhang durch die Formel beschrieben werden:

$$s(t) = F\{h(\tau), t\},$$

mit dem Funktional F und dem schwankungsabhängigen Füllstandssignal h(τ).

Bei der Füllstandsmessung liegt jedoch das Sensorsignal s(t) vor und es soll das zeitliche Füllstandssignal h(t) oder dessen Mittel $\overline{h(t)}$ bestimmt werden. Dies wird durch Inversion des Funktionals F erreicht.

Diese Inversion ist jedoch je nach Modell aufgrund des in der Regel nichtlinearen Systemverhaltens entsprechend aufwendig oder sogar unmöglich. Für das Verfahren zur Berechnung des zeitlichen Füllstandssignals h(t) oder dessen Mittel $\overline{h(t)}$ werden somit vorzugsweise entsprechende Näherungen angewandt, die z. B. analytisch oder aus empirischen Untersuchungen gewonnen werden.

Ein besonders einfaches erfindungsgemäßes Verfahren sieht vor, dass ein korrigiertes zeitliches Füllstandssignal h(t) durch Subtrahieren eines Korrektursignals $\Delta\overline{s}$ von dem oben erwähnten gemessenen mittleren Füllstandssignal $\overline{s(t)}$ berechnet wird. Das Korrektursignal $\Delta\overline{s}$ ist eine Funktion der zeitlichen Schwankungen des Füllstandspegels und hängt damit von den zuletzt beobachteten Schwankungen des Sensorsignals s(t) ab. Diese Schwankungen des Sensorsignals s(t) können z. B. durch eine laufende zeitliche Streuung σ(s) mit der Funktion

$$\sigma(s) = \sqrt{\frac{1}{T}\int_{-T/2}^{+T/2}\left(s(t+\tau) - \overline{s}\right)^2 d\tau}$$

analytisch charakterisiert werden.

Das korrigierte zeitliche Füllstandssignal h(t) oder dessen Mittelwert $\overline{h(t)}$ wird dann aus dem korrigierten mittleren Sensorsignal $\overline{s}_{corr}$ nach der Formel

$$\overline{s}_{corr} = \overline{s} - \Delta\overline{s}$$

bestimmt, wobei der Korrekturwert $\Delta\overline{s}$ nicht nur eine Funktion der Streuung σ*(s), sondern von weiteren Materialeigenschaften und externen Einflüssen ist:

$$\Delta\overline{s} = f\left(\sigma(s), \eta, \rho, T, ....\right)$$

Der Korrekturwert $\Delta\overline{s}$ ist damit von der Streuung σ(s), Viskosität η, der Dichte ρ, der Temperatur T etc. abhängig.

Das Verfahren ist insbesondere zur Bestimmung des Füllstands von Motoröl in einem Verbrennungsmotor geeignet, da der Flüssigkeitsfilm vom Motoröl nur langsam an der Oberfläche eines Füllstandssensors 1 abläuft. In diesen und entsprechenden Anwendungsgebieten ergibt sich zusätzlich das Problem, dass sich immer bei laufendem Verbrennungsmotor eine bestimmte Motorölmenge im Umlauf befindet. Es wird daher zusätzlich vorgeschlagen, dem Füllstandssignal h(t) oder dem Sensorsignal s(t) einen Wert hinzuzurechnen, der die im Umlauf befindliche Motorölmenge repräsentiert. Dieser Wert wird insbesondere als Funktion der Drehzahl des Verbrennungsmotors und der Temperatur Temp des Motoröls bestimmt.

**Patentansprüche**

1.  Verfahren zur Berechnung eines zeitlichen Füllstandssignals (h(t)) aus einem Sensorsignal (s(t)) eines Füllstandssensors (1) zur Detektion des Füllstandspegels einer Flüssigkeit (4), **dadurch gekennzeichnet, dass** das zeitliche Füllstandssignal (h(t)) als Funktion des Sensorsignals (s(t)) und des modellierten Ablaufverhaltens der Flüssigkeit (4) am Füllstandssensor (1) berechnet wird.

2.  Verfahren nach Anspruch 1, **dadurch gekennzeichnet, dass** das Ablaufverhalten in Abhängigkeit von den Parametern Viskosität (η) der Flüssigkeit,

Dichte ($\rho$) der Flüssigkeit, Oberflächenbeschaffenheit des Flüssigkeitssensors und/oder Temperatur (Temp) der Flüssigkeit modelliert wird.

3. Verfahren nach Anspruch 1 oder 2, **dadurch gekennzeichnet, dass** die Funktion zur Berechnung des zeitlichen Füllstandssignals ($h(t)$ weiterhin von den modellierten Auswirkungen eines Flüssigkeitsfilms an dem Füllstandsensor (1) auf das Sensorsignal ($s(t)$) abhängig ist.

4. Verfahren nach einem der vorhergehenden Ansprüche, **gekennzeichnet durch** Subtrahieren eines Korrektursignals ($\Delta \overline{s}$) von einem mittleren gemessenen Sensorsignal ($\overline{s(t)}$), wobei das Korrektursignal ($\Delta \overline{s}$) eine Funktion von zeitlichen Schwankungen des Füllstandspegels ist.

5. Verfahren nach Anspruch 4, **dadurch gekennzeichnet, dass** das Korrektursignal) ($\Delta \overline{s}$) eine Funktion der laufenden zeitlichen Streuung ($\sigma(s)$) ist.

6. Verfahren nach Anspruch 4 oder 5, **dadurch gekennzeichnet, dass** das Korrektursignal ($\Delta \overline{s}$) eine Funktion der Viskosität ($\eta$) der Flüssigkeit, Dichte ($\rho$) der Flüssigkeit und/oder Temperatur (Temp) der Flüssigkeit ist.

7. Verfahren nach einem der vorhergehenden Ansprüche zur Berechnung eines zeitlichen Füllstandssignals ($h(t)$) von Motoröl in einem Verbrennungsmotor, **gekennzeichnet durch** Addieren einer im Verbrennungsmotor umlaufenden Menge von Motoröl auf das ermittelte Füllstandssignal ($h(t)$), wobei die umlaufende Menge als Funktion der Drehzahl des Verbrennungsmotors und der Temperatur des Motoröls bestimmt wird.

8. Füllstandsmeßsystem mit mindestens einem Füllstandssensor (1) zur Detektion des Füllstandspegels einer Flüssigkeit (4) und einer Recheneinheit (2) zur Berechnung eines zeitlichen Füllstandssignals ($h(t)$) aus dem Sensorsignals ($s(t)$)des mindestens einen Füllstandssensors (1) , **dadurch gekennzeichnet, dass** das Füllstandsmeßsystem zur Durchführung des Verfahrens nach einem der vorhergehenden Ansprüche ausgebildet ist.

9. Füllstandsmeßsystem nach Anspruch 8, **dadurch gekennzeichnet, dass** das Füllstandsmeßsystem an einen Temperatursensor (6) zur Ermittlung der Temperatur (Temp) der Flüssigkeit und Bestimmung des zeitlichen Füllstandssignals ($h(t)$) als Funktion der Temperatur (Temp) anschließbar ist.

10. Füllstandsmeßsystem nach einem der Ansprüche 8 oder 9, zur Berechnung eines zeitlichen Füllstandssignals ($h(t)$) von Motoröl in einem Verbrennungsmotor, **dadurch gekennzeichnet, dass** das Füllstandsmeßsystem an ein Drehzahlmeßgerät zur Ermittlung der Drehzahl des Verbrennungsmotors und Bestimmung des zeitlichen Motoröl-Füllstandssignals als Funktion der Drehzahl anschließbar ist.

## Claims

1. Method for calculating a filling level time signal ($h(t)$) from a sensor signal ($s(t)$) of a filling level sensor (1) for detecting the filling level of a liquid (4), **characterized in that** the filling level time signal ($h(t)$) is calculated as a function of the sensor signal ($s(t)$) and the modelled outflow behaviour of the liquid (4) at the filling level sensor (1).

2. Method according to Claim 1, **characterized in that** the outflow behaviour is modelled as a function of the following parameters: viscosity ($\eta$) of the liquid, the density ($\rho$) of the liquid, the surface condition of the liquid sensor and/or the temperature (Temp) of the liquid.

3. Method according to Claim 1 or 2, **characterized in that** the function for calculating the filling level time signal ($h(t)$) is also dependent on the modelled effects of a liquid film over the filling level sensor (1) on the sensor signal ($s(t)$).

4. Method according to one of the preceding claims, **characterized by** subtracting a correction signal ($\Delta \overline{s}$) from an average measured sensor signal ($\overline{s}(t)$) , with the correction signal ($\Delta \overline{s}$) being a function of fluctuations in the filling level with respect to time.

5. Method according to Claim 4, **characterized in that** the correction signal ($\Delta \overline{s}$) is a function of the current time scatter ($\sigma(s)$).

6. Method according to Claim 4 or 5, **characterized in that** the correction signal ($\Delta \overline{s}$) is a function of the viscosity ($\eta$) of the liquid, the density ($\rho$) of the liquid and/or the temperature (Temp) of the liquid.

7. Method according one of the preceding claims for calculating a filling level time signal ($h(t)$) of engine oil in an internal combustion engine, **characterized by** adding a quantity of engine oil circulating in the internal combustion engine to the ascertained filling level signal ($h(t)$), with the circulating quantity being determined as a function of the rotation speed of the internal combustion engine and the temperature of the engine oil.

8. Filling level measurement system having at least one filling level sensor (1) for detecting the filling level of a liquid (4) and a computer unit (2) for calculating a filling level time signal ($h(t)$) from the sensor signal ($s(t)$) of the at least one filling level sensor (1), **characterized in that** the filling level measurement system is designed to carry out the method according to one of the preceding claims.

9. Filling level measurement system according to Claim 8, **characterized in that** the filing level measurement system can be connected to a temperature sensor (6) for ascertaining the temperature (Temp) of the liquid and determining the filling level time signal ($h(t)$) as a function of the temperature (Temp).

10. Filling level measurement system according to either of Claims 8 and 9 for calculating a filling level time signal ($h(t)$) of engine oil in an internal combustion engine, **characterized in that** the filling level measurement system can be connected to a rotation speed measuring device for ascertaining the rotation speed of the internal combustion engine and determining the engine oil filling level time signal as a function of the rotation speed.

## Revendications

1. Procédé de calcul d'un signal de niveau de remplissage temporel (h(t)) à partir d'un signal de capteur (s(t)) d'un capteur de niveau de remplissage (1), pour la détection du niveau de remplissage d'un liquide (4), **caractérisé en ce que** le signal de niveau de remplissage temporel (h(t)) est calculé sous forme de fonction du signal de capteur (s(t)) et du comportement modélisé d'écoulement du liquide (4) au niveau du capteur de niveau de remplissage (1).

2. Procédé selon la revendication 1, **caractérisé en ce que** le comportement d'écoulement est modélisé en fonction des paramètres de viscosité (η) du liquide, de densité (ρ) du liquide, de constitution superficielle du capteur de liquide et/ou de température (Temp) du liquide.

3. Procédé selon la revendication 1 ou 2, **caractérisé en ce que** la fonction de calcul du signal de niveau de remplissage temporel (h(t)) dépend en outre des effets modélisés qu'un film de liquide sur le capteur de niveau de remplissage (1) a sur le signal de capteur (s(t)).

4. Procédé selon l'une quelconque des revendications précédentes, **caractérisé par** la soustraction d'un signal de correction ($\overline{\Delta s}$) d'un signal de capteur mesuré moyen (s(t)), le signal de correction ($\overline{\Delta s}$) étant une fonction de variations temporelles du niveau de remplissage.

5. Procédé selon la revendication 4, **caractérisé en**

**ce que** le signal de correction ($\overline{\Delta s}$) est une fonction de la dispersion temporelle courante ($\sigma(s)$).

6. Procédé selon la revendication 4 ou 5, **caractérisé en ce que** le signal de correction ($\overline{\Delta s}$) est une fonction de la viscosité (η) du liquide, de la densité (ρ) du liquide et/ou de la température (Temp) du liquide.

7. Procédé selon l'une quelconque des revendications précédentes, pour le calcul d'un signal de niveau de remplissage temporel (h(t)) d'huile de moteur dans un moteur à combustion interne, **caractérisé par** l'addition d'une quantité d'huile de moteur circulant dans le moteur à combustion interne au signal de niveau de remplissage temporel (h(t)) détecté, la quantité en circulation étant déterminée en tant que fonction du régime du moteur à combustion interne et de la température de l'huile de moteur.

8. Système de mesure du niveau de remplissage comprenant au moins un capteur de niveau de remplissage (1) pour détecter le niveau de remplissage d'un liquide (4) et une unité de calcul (2) pour calculer un signal de niveau de remplissage temporel (h(t)) à partir du signal de capteur (s(t)) de l'au moins un capteur de niveau de remplissage (1), **caractérisé en ce que** le système de mesure du niveau de remplissage est réalisé pour mettre en oeuvre le procédé selon l'une quelconque des revendications précédentes.

9. Système de mesure du niveau de remplissage selon la revendication 8, **caractérisé en ce que** le système de mesure du niveau de remplissage peut être raccordé à un capteur de température (6) pour déterminer la température (Temp) du liquide et déterminer le signal de niveau de remplissage temporel (h(t)) en fonction de la température (Temp).

10. Système de mesure du niveau de remplissage selon l'une quelconque des revendications 8 ou 9, pour le calcul d'un signal de niveau de remplissage temporel (h(t)) d'huile de moteur dans un moteur à combustion interne, **caractérisé en ce que** le système de mesure du niveau de remplissage peut être raccordé à un appareil de mesure de régime pour déterminer le régime du moteur à combustion interne et déterminer le signal du niveau de remplissage d'huile de moteur temporel en fonction du régime.

Fig. 1

Fig. 2

Fig. 3